## Europäisches Patentamt
## European Patent Office
## Office européen des brevets

(19)

(11) Veröffentlichungsnummer: **0 040 770 B1**

(12) # EUROPÄISCHE PATENTSCHRIFT

(45) Veröffentlichungstag der Patentschrift: **21.09.83**

(51) Int. Cl.³: **B 01 J 13/02, B 41 M 5/00**

(21) Anmeldenummer: **81103743.1**

(22) Anmeldetag: **15.05.81**

(54) **Konzentrierte Mikrokapselsuspension, ein Verfahren zu ihrer Herstellung und ihre Verwendung für Reaktionsdurchschreibepapier.**

(30) Priorität: **28.05.80 DE 3020148**

(43) Veröffentlichungstag der Anmeldung:
**02.12.81 Patentblatt 81/48**

(45) Bekanntmachung des Hinweises auf die Patenterteilung:
**21.09.83 Patentblatt 83/38**

(84) Benannte Vertragsstaaten:
**AT BE CH DE FR GB IT LI NL SE**

(56) Entgegenhaltungen:
EP-A-0 016 378
DE-A-2 242 910
DE-A-2 251 381
DE-A-2 541 001
DE-A-2 557 407
DE-A-2 655 048
DE-A-2 756 586
DE-A-2 833 651
DE-B-1 222 067
GB-A-1 091 141
US-A-3 914 511

(73) Patentinhaber: **BAYER AG, Zentralbereich Patente, Marken und Lizenzen, D-5090 Leverkusen 1, Bayerwerk (DE)**

(72) Erfinder: **Jabs, Gert, Dr., Wingensieferkamp 25, D-5068 Odenthal (DE)**
Erfinder: **Baatz, Günther, Dr., Zimmermannstrasse 2, D-8941 Buxheim (DE)**
Erfinder: **Bock, Manfred, Dr., Haydn-Strasse 18, D-5090 Leverkusen (DE)**
Erfinder: **Dahm, Manfred, Dr., Am Falkenberg 29, D-5090 Leverkusen 3 (DE)**
Erfinder: **Haus, Artur, Dr., Zum Eschental 8, D-5063 Overath (DE)**
Erfinder: **Wegner, Christian, Dr., Roggendorfstrasse 65, D-5000 Köln 80 (DE)**

ACTORUM AG

Konzentrierte Mikrokapselsuspension, ein Verfahren zu ihrer Herstellung und ihre Verwendung für Reaktionsdurchschreibepapier

Die Erfindung betrifft ein Verfahren zur Herstellung von konzentrierten Mikrokapselsuspensionen nach dem Grenzflächenpolyadditionsverfahren aus Polyisocyanaten und Aminen, anschliessender Nachbehandlung und Neutralisation, das dadurch gekennzeichnet ist, dass als Polyisocyanat isocyanuratmodifizierte aliphatische Polyisocyanate verwendet werden, und direkt nach Zugabe der Amine und vor einer weiteren Nachbehandlung die wässrige Suspension auf einen pH-Wert $\leq 7$ gebracht wird.

Die Erfindung betrifft überdies die Verwendung von anmeldungsgemäss hergestellten, konzentrierten Mikrokapselsuspensionen, die Farbstoffvorläufer eingekapselt enthalten, zur Herstellung von partiell beschichteten Durchschreibesystemen nach dem Tief- und Flexodruckverfahren.

Die Herstellung von Mikrokapseln nach dem Grenzflächenpolyadditionsverfahren unter Verwendung von Polyisocyanaten ist bekannt, z.B. aus den DE-A-2190921; 2242910; 2342066 und 2311712.

Technisch besonders interessant ist die Verkapselung von Leukofarbstoffen zur Herstellung von Reaktionsdurchschreibepapieren. Sie ist beschrieben z.B. in den DE-A-2537982; 2434406; 2109335 und der US-A-3900669.

Reaktionsdurchschreibepapiere sind ebenfalls bekannt (vergl. M. Gutcho, Capsule Technology and Microencapsulation, Noyes Data Corporation, 1972, Seiten 242–277; G. Baxter in Microencapsulation, Processes and Applications, herausgegeben von J. E. Vandegaer, Plenum Press, New York, London, Seiten 127–143).

Reaktionsdurchschreibepapiere bestehen vorzugsweise aus zwei oder mehreren lose aufeinandergelegten Papierblättern, wobei das jeweils obere auf der Rückseite eine Geberschicht und das jeweils untere auf der Vorderseite eine Nehmerschicht enthält. Es ist also jeweils eine Geberschicht und eine Nehmerschicht miteinander in Kontakt. Die Geberschicht enthält Mikrokapseln, deren Kernmaterial eine Lösung eines Farbbildners in einem organischen Lösungsmittel ist und die Nehmerschicht enthält ein Material, das den Farbstoffbildner zum Farbstoff entwickelt.

Beim Beschreiben werden die Kapseln unter dem hohen Druck des Schreibgerätes zerstört und das auslaufende Kernmaterial trifft auf die Nehmerschicht, so dass eine Durchschrift entsteht.

Die Nehmerschicht enthält in der Regel Bindemittel und Pigmente, z.B. Absorbentien, wie Kaolin, Attapulgit, Montmorillonit, Bentonit, saure Bleicherde oder Phenolharze. Man kann z.B. auf der Geberschicht säure-aktivierbare Farbstoffe und in der Nehmerschicht sauer reagierende Komponenten einsetzen.

Die Geberschicht wird im allgemeinen vollflächig auf das Papiersubstrat aufgebracht, wobei man bekannte Methoden anwendet. z.B. die der

DE-A-1 934 457 oder 1 955 542, das heisst, man benötigt wässrige Beschichtungsmittel. Das Wasser muss nach der Beschichtung entfernt werden. Der Energieaufwand ist dabei umso grösser, je niedriger die Konzentration der Mikrokapseln im Beschichtungsmittel ist.

Vollflächige Geberschichten sind meist unnötig, weil häufig nur Teile des Durchschreibesystems beschrieben werden.

Man hat deshalb versucht, Geberschichten partiell auf ein Papiersubstrat aufzubringen; so hat man wässrige Beschichtungen durch Tiefdruck oder Flexodruck partiell auf einen Papierträger aufgebracht (DE-A-2 541 001, US-A-3 016 308 und 3 914 511). Wässrige Flexodruckpasten sind sehr konzentriert. Mikrokapseldispersionen für dieses Verfahren müssen daher erst konzentriert werden.

Auch bei der Herstellung der Mikrokapseldispersionen selbst ist der Energieaufwand, bezogen auf die Menge an Mikrokapseln, umso höher, je niedriger der Gehalt an Kapseln ist, da immer die gesamte Dispersion hochgeheizt oder gekühlt werden muss.

Bisher ist es nicht gelungen, Mikrokapselsuspensionen nach dem Grenzflächenpolymerisationsverfahren direkt herzustellen, die einen Gehalt an Kapseln über 35 Gew.-% aufweisen und dennoch niedrige Viskosität besitzen.

Als Grund hierfür wird genannt, das es zwischen den polyfunktionellen, wandbildenden Mono- oder Oligomeren in den Einzeltröpfchen der dispergierten organischen Phase und den ebenfalls mehrfunktionellen Reaktionspartnern in der kontinuierlichen Phase bei hohem Gehalt an organischer Phase zu agglomeratbildenden Polymerisationen zwischen den Einzeltröpfchen kommt.

In der Regel müssen nach dem Grenzflächenpolymerisationsverfahren hergestellte Dispersionen über längere Zeit thermisch nachbehandelt werden, da durch die erste Kapselwandbildung die Reaktionspartner voneinander getrennt sind und nur bei erhöhter Temperatur zu einer weiteren Abreaktion gezwungen werden können.

Diese thermische Nachbehandlung erhöht auch die Agglomeratbildung. Andererseits besitzt angeblich nur eine ausreagierte Kapselwand alle für die praktische Anwendung notwendigen Eigenschaften.

Die geschilderte thermische Nachbehandlung ist in der DE-A-2 655 048 beschrieben. Den Beispielen ist zu entnehmen, dass nach der Kapselwandbildung die thermische Nachbehandlung erfolgt, an die sich eine Neutralisation anschliesst. Nach diesem Verfahren ist es nicht möglich, Mikrokapselsuspensionen mit einem Kapselgehalt von über 35 Gew.-% direkt herzustellen.

Dieser Erfindung liegt die Erkenntnis zugrunde, dass konzentrierte Suspensionen mit einem Gehalt an Mikrokapseln von 35–60 Gew.-% nach dem Polyadditionsverfahren erhalten werden, wenn als Polyisocyanate Isocyanurat-modifizierte aliphatische Polyisocyanate verwendet werden, und die Suspensionen direkt nach der Aminzugabe auf einen pH-Wert kleiner oder gleich 7 gestellt werden.

Gegenstand der vorliegenden Erfindung ist demnach ein Verfahren zur Herstellung von wässrigen 35–60 Gew.-% Mikrokapseln enthaltenden Suspensionen nach dem Grenzflächenpolyadditionsverfahren aus Polyisocyanaten und Aminen, anschliessender Nachbehandlung und Neutralisation, dadurch gekennzeichnet, dass als Polyisocyanat ein Isocyanurat-modifiziertes aliphatisches Polyisocyanat verwendet wird, und direkt nach Zugabe der Amine und vor einer weiteren Nachbehandlung die Suspension auf einen pH-Wert kleiner oder gleich 7 gebracht wird.

Gegenstand der vorliegenden Erfindung ist insbesondere die Herstellung von hochkonzentrierten Mikrokapseldispersionen, die Farbstoffvorläufer verkapselt enthalten, sowie die Verwendung derartiger Suspensionen zur Herstellung partiell kopierender Durchschreibesysteme nach dem Tief- und Flexodruckverfahren.

Die nach dem erfindungsgemässen Verfahren einzusetzenden aliphatischen Isocyanurat-modifizerten Isocyanate sind solche auf Basis von 1,4-Xylylendiisocyanat, Trimethylendiisocyanat, Tetramethylendiisocyanat, Propylen-1,2-diisocyanat, Butylen-1,2-diisocyanat, Ethyliden-diisocyanat Cyclohexyl-1,4-diisocyanat, m-Xylylendiisocyanat, Hexamethylen-1,6-diisocyanat, 4,4'-Diisocyanato-dicyclohexylmethan und Isophorondiisocyanat.

Verfahren zur Herstellung Isocyanurat-modifizierter Polyisocyanate mit mehr als zwei endständigen Isocyanatgruppen sind bekannt. Speziell ist in der DE-A-2 839 133 die Herstellung Isocyanurat-modifizierter Polyisocyanate auf Basis Hexamethylendiisocyanat beschrieben. Die Übrigen können analog erhalten werden.

Zur Herstellung der Mikrokapseln nach dem Polyadditionsverfahren kann zunächst das Isocyanat in dem Kernmaterial der späteren Kapsel gelöst werden und diese organische Phase in der kontinuierlichen wässrigen Phase, die Schutzkolloid und gegebenenfalls Emulgatoren enthält, emulgiert werden. Zu dieser Emulsion gibt man eine wässrige Polyaminlösung in stöchiometrischer Menge, bezogen auf das Polyisocyanat in der organischen Phase.

Bei den einzukapselnden hydrophoben Kernmaterialien kann es sich beispielsweise um synthetische Öle, wie Alkylnaphthaline, alkylierte Diphenyle, alkylierte Diphenylalkane, Hexahydroterphenyl, Triaryldimethane, chlorierte Paraffine, Diethylphthalat, Dibutylphthalat, Dioctylphthalat, Dibutylmaleat, Toluol, Dichlorbenzol oder Benzylalkohol, oder natürliche Öle wie Baumwollsamenöl, Sojabohnenöl, Kornöl, z.B. Maisöl, Rizinusöl, Fischöl oder Schweinefett handeln.

Ferner kann das Kernmaterial ein synthetisches und/oder natürliches Parfümöl oder eine Lösung davon sein, ein Klebstoff oder eine Klebstofflösung z.B. Acrylate, Methacrylate, Polyvinylacetate) sowie eine Lösung von Naturkautschuk.

Auch Pflanzenschutzmittel und deren Lösungen können eingekapselt werden, beispielsweise verschiedene Fungizide, Insektizide und Herbizide. Eingekapselte Pflanzenschutzmittel vermindern die akute Toxizität der Wirkstoffe bei der Handhabung und verlängern die Wirkungsdauer.

Bevorzugt werden nach dem erfindungsgemässen Verfahren Lösungen von Farbstoffvorläufern als Kernmaterial eingesetzt.

Beispiele für die Farbstoffvorläufer sind Triphenylmethanverbindungen, Diphenylmethanverbindungen, Xanthenververbindungen, Thiazinverbindungen und Spiropyranverbindungen.

Im einzelnen sind geeignet:
Als Triphenylmethanverbindungen: 3,3-Bis-(p-dimehtylaminophenyl)-6-dimethylaminophthalid («Kristallviolettlacton», oder «C.V.L.») und 3,3-Bis-(p-dimehtylaminophenyl)-phthalid («Malachitgrünlacton»); als Dimehtylmethanverbindungen: 4,4'-bisdimehtylaminobenzhydrylbenzyläther, N-Halogenphenylleucolamin, N-β-Naphthyl-leucolamin, N-2,4,5-Trichlorphenylleucolamin, N-2,4-Dichlorphenylleucolamin; als Xanthenverbindungen Rhodamin-β-anilinolactam, Rhodamin-β-(p-nitroanilin)-lactam, Rhodamin-β-(p-chloranilin)-lactam, 7-Dimethyl-amin-2-methoxyfluoran, 7-Diethylamin-3-methoxyfluoran, 7-Diethylamin-3-methylfluoran, 7-Diethylamin-3-chlorfluoran, 7-Diethylamin-3-chlor-2-methylfluoran, 7-Diethylamin-2,4-Dimethylfluoran, 7-Diethylamin-2,3-dimethylfluoran, 7-Diethylamin-(3-acetylmethylamin)-fluoran, 7-Diethylamin-3-methylfluoran, 3,7-Diethylaminfluoran, 7-Diethylamino-3-(dibenzylamin)-fluoran, 7-Diethylamin-3-(methylbenzylamin)-fluoran, 7-Diethylamin-3-(chlorethylmethylamino)-fluoran, 7-Diethylamin-3-(dichlorethylamin)-fluoran, 7-Diethylamin-3-(diethylamin)-fluoran; als Thiazinverbindungen N-Benzoylleukomethylenblau, o-Chlorbenzoylleukomethylenblau, p-Nitrolbenzoylleucomethylenblau; als Spiroverbindung 3-Methyl-2,2-spirobis-(benzo(f)-chromen).

Lösungsmittel, die diese Farbbildner lösen, sind z.B. chloriertes Diphenyl, chloriertes Paraffin, Baumwollsamenöl, Erdnussöl, Siliconöl, Phthalatester, Phosphatester, Sulfonatester, Monochlorbenzol, ferner teilhydrierte Terphenyle, alkylierte Diphenyle, alkylierte Naphthaline, Arylether, Arylalkylether, höher alkyliertes Benzol und andere, die allein oder kombiniert eingesetzt werden können.

Häufig werden den Lösungsmitteln Verdünnungsmittel zugesetzt, wie beispielsweise Kerosin, n-Paraffine, Isoparaffine.

Zur Herstellung der Mikrokapseln nach dem Polyadditionsverfahren kann das Isocyanat in den genannten hydrophoben Kernmaterialien gelöst und diese organische Phase in der kontinuierlichen wässrigen Phase, die Schutzkolloid und gegebenenfalls Emulgatoren enthalten kann, emulgiert werden. Zur Emulsion kann man eine wässrige Polyaminlösung in stöchiometrischer Menge zum Polyisocyanat in der organischen Phase geben.

Zur Umsetzung mit den genannten Isocyanaten geeignete Diamine sind aliphatische primäre oder sekundäre Polyamine, wie z.B. Ethylendiamin-(1,2), Bis(3-aminopropyl)amin, Hydrazin, Hydrazinethanol-(2), Bis-(2-methylaminoethyl)-methylamin, 1,4-Diaminocyclohexan, 3-Amino-1-methyl-aminopropan, N-Hydroxy-ethylethylendiamin, N-Methyl-bis-(3-aminopropyl)-amin, 1,4-Diamino-n-butan, 1,6-Diamino-n-Hexan, Ethylen-(1,2)-diamin-N-Ethylsulfonsäure (als Alkalisalz); 1-Aminoethylethylendiamin-(1,2), Bis-(N,N'-Aminoethyl)-ethylendiamin-(1,2). Hydrazin und seine Salze werden im vorliegenden Zusammenhang ebenfalls als Diamine angesprochen.

Zur Emulgierung und Stabilisierung der gebildeten Emulsion werden der wässrigen Phase Schutzkolloide und Emulgierhilfsmittel zugesetzt. Beispiele für solche als Schutzkolloide wirkende Produkte sind Carboxymethylcellulose, Gelatine und Polyvinylalkohol. Beispiele für Emulgatoren sind oxethyliertes 3-Benzylhydroxybiphenyl, Umsetzungsprodukte von Nonylphenol mit unterschiedlichen Mengen Ethylenoxid und Sorbitanfettsäureester.

Die Mikrokapseln können kontinuierlich oder diskontinuierlich hergestellt werden. Man verwendet im allgemeinen Dispergiergeräte, die ein Schergefälle erzeugen. Beispiele hierfür sind Blatt-, Korb-, Schnellrührer, Kolloidmühlen, Homogenisatoren, Ultraschalldispergatoren, Düsen, Stahldüsen, Supratonmaschinen. Die Stärke der Turbulenz beim Vermischen ist in erster Linie bestimmend für den Durchmesser der erhaltenen Mikrokapseln. Kapseln in der Grösse von 1 bis 2000 $\mu$m können hergestellt werden. Bevorzugt sind Kapseln mit Durchmessern von 2 bis 20 $\mu$m.

Die Kapseln agglomerieren nicht und haben eine enge Teilchengrössenverteilung. Das Gewichtsverhältnis von Kernmaterial zu Hüllenmaterial ist 50–90 zu 50–10.

Die Herstellungsrezepturen der Mikrokapseln werden beim erfindungsgemässen Verfahren so eingestellt, dass Suspensionen mit einem Kapselgehalt von 35–60 Gew.-% erhalten werden.

Nach der Zugabe der Amine wird die Suspension mit einer Säure auf einen pH-Wert von 7 und darunter eingestellt. Es können beispielsweise wässrige Mineralsäuren wie beispielsweise Salzsäure verwendet werden, wie auch organische Säuren wie Essigsäure, Oxalsäure u.a.m. Ferner können beispielsweise auch Säurehydride oder sauer reagierende, gasförmige Verbindungen wie z.B. speziell Kohlendioxid eingesetzt werden.

Die hochkonzentrierten Suspensionen können nach einer kurzen weiteren Nachbehandlung direkt für den jeweils vorgesehenen Einsatzzweck verwendet werden.

Die Suspensionen lassen sich beispielsweise durch Sprühtrocknung in agglomeratfreie Kapselpulver überführen. Die Sprühtrocknung ist bei derartig konzentrierten Suspensionen besonders rationell, da die zu verdampfende Menge Wasser vergleichsweise gering ist. Farbstoffvorläufer enthaltende Mikrokapseldispersionen können beispielsweise zur Herstellung kohlefreier Durchschreibepapiere verwendet werden.

Hierzu werden die erfindungsgemässen Suspensionen mit Bindemitteln und Abstandshaltern versehen und auf eine Papierträgerbahn aufgestrichen. Die Formulierung derartiger Streichfarben ist längst bekannter Stand der Technik.

Vorteilhafterweise können jedoch beim erfindungsgemässen Verfahren hochkonzentrierte Streichmassen verwendet und dabei die Trocknung der Beschichtungsmassen rationeller gestaltet werden.

Insbesondere gestattet das erfindungsgemässe Verfahren den Einsatz anderer Beschichtungstechniken, wie beispielsweise den Auftrag mit blade-coater oder mittels Gravurwalzen. Derartige Beschichtungstechniken sind bereits bekannt, liessen sich bisher jedoch nicht für kapselhaltige Streichmassen rationell einsetzen. Diese Auftragstechniken gestatten einen wesentlich schnelleren Auftrag der Beschichtungsmassen als beispielsweise eine Beschichtung mit Luftrakel, wie sie bei der Herstellung der CB-Papiere bislang üblicherweise verwendet wird.

Das Auftragverfahren mit Gravurwalzen stellt bereits ein modifiziertes, wässriges «Tiefdruck»-Verfahren dar. Es ist auch möglich, die erfindungsgemässen Suspensionen aufgrund des hohen Kapselgehaltes direkt, ohne aufwendige Aufkonzentrierung, zur Herstellung wässriger Flexodruckpasten zu verwenden. Die Herstellung kapselhaltiger Flexodruckpasten und die Herstellung von vollflächig oder partiell beschichteten Durchschreibepapieren nach dem Flexodruckverfahren ist bereits bekannt. Der Vorteil beim Einsatz der erfindungsgemässen Suspensionen besteht darin, dass bislang notwendige Aufkonzentrierungen entfallen können.

Als Reaktionspartner für die Farbstoffvorläufer in den Mikrokapseln können an sich bekannte Farbentwickler eingesetzt werden, wie beispielsweise saure Tone, Montmorrillonit, Bentonite und Smectite oder synthetische Phenolharze.

Die Geberkomponente ist im allgemeinen bei Durchschreibesätzen die Rückseite des Oberblattes. Die Vorderseite des nächsten Blattes ist mit der Reaktionskomponente beschichtet. Man bezeichnet diese Schicht als Nehmerkomponente. Bei Durchschreibesätzen ist die Nehmerkomponente die Oberseite des zweiten Papierblattes. Bei Mehrfachdurchschreibesätzen müssen die folgenden Geberblätter auf der Gegenseite eine Nehmerbeschichtung tragen. Die Herstellung solcher Nehmerschichten ist bekannt und ebenfalls in den deutschen Offenlegungsschriften DE-A-1 934 457 und DE-A-1 955 542 beschrieben. Weitere Einzelheiten zur Durchführung des erfindungsgemässen Verfahrens sind den nachfolgenden Beispielen zu entnehmen.

Beispiel 1
In 1700 g Toluol werden 300 g Isocyanurat-modifiziertes Hexamethylendiisocyanat (NCO-Gehalt = 20,5%, Gehalt an monomerem Hexamethylendiisocyanat <0,7%) gelöst. Diese organische Phase wurde in 1605 g wässriger Phase, die 2% zu 88% hydrolysiertes Polyvinylacetat enthält, mit einer Ultraschallpfeife emulgiert, wobei die Tropfengrösse der Emulsion auf etwa 7 μm eingestellt wurde. Es erfolgte sodann die Zugabe von 50,4 g Diethylentriamin, gelöst in 344,6 g Wasser.

Nach Zugabe des Amins wurde die Suspension mit 10%iger Salzsäure tropfenweise auf einen pH-Wert von 6,5 eingestellt und 1 Stunde bei 60°C getempert.

Es wurde eine Suspension erhalten, deren Trockengehaltsbestimmung einen Gewichtsanteil an Kapseln von 48,5% ergab.

Die Viskosität, gemessen nach Brookfield bei 100 Upm, betrug 240 mPas.

Beispiel 2

Zu 127,5 g Xylol werden 22,5 g Isocyanurat-modifiziertes Isophorondiisocyanat (NCO-Gehalt 18%) gelöst. Nach Zugabe von 133 g Wasser, in dem 2 Gewichtsprozent 88% hydrolysiertes Polyvinylacetat gelöst war, wurde an einer Mischsirene (Fa. Kotthoff) bei 8900 Upm emulgiert.

Anschliessend erfolgte die Zugabe von 3 g Ethylendiamin in 47 g Wasser. Nach Aminzugabe wurde mit 5%iger wässriger Schwefelsäure ein pH-Wert von 7 eingestellt. Die Suspension wurde dann auf 50°C aufgeheizt und 2 Stunden bei 50°C belassen.

Es wurde eine Suspension mit einem gemessenen Kapselgehalt von 45 Gew.-% erhalten. Die mittlere Korngrösse betrug 10 μm.

Beispiel 3

In 1372 g Diisopropylnaphthalin und 328 g Isohexadecan wurden 46 g Kristallviolettlacton und 15 g N-Benzoylleukomethylenblau gelöst. Zu diesem Kernmaterial wurden 300 g Isocyanurat-modifiziertes Hexamethylendiisocyanat des Beispiels 1 gegeben. Diese organische Phase wurde in 1605 g Wasser, das 2 Gewichtsprozent 88% verseiftes Polyvinylacetat gelöst enthielt, mit einer Ultraschallpfeife emulgiert und die Tröpfchengrösse auf 7 μm eingestellt.

Anschliessend wurden 65 g Isophorondiamin und 19 g Hydrazinhydrat in 311 g Wasser zugefügt. Nach der Aminzugabe wurde unter Rühren Kohlendioxid so lange durch die Suspension geleitet, bis ein pH-Wert von 6,9 erreicht war. Die Slurry wurde sodann auf 60°C aufgeheizt und 2 Stunden unter Rühren bei dieser Temperatur belassen. Es wurde eine Slurry erhalten, deren Trockengehaltsbestimmung einen Kapselgehalt von 49,5% ergab. Die Viskosität, gemesen nach Brookfield analog Beispiel 1, betrug 370 mPas.

Beispiel 4

Es wurde analog Beispiel 3 verfahren, jedoch wurde nach der Aminzugabe anstelle von Kohlendioxid eine 10%ige wässrige Salzsäurelösung zur Suspension gegeben. Die Slurry wurde nachbehandelt, wie in Beispiel 3 weiter beschrieben. Die Suspension wies einen gemessenen Gehalt an Kapseln von 49% auf und hatte eine Viskosität von 170 mPas.

Beispiel 5

Die Mikrokapseldispersionen wurden mit einem 30 μm Drahtrakel auf ein Trägerpapier aufgestrichen und auf diese Weise ein Deckblatt eines kohlefreien Durchschreibepapiers hergestellt.

Eine Probe des hergestellten Papiers wurde mit der beschichteten Seite auf ein Nehmerpapier gelegt und 7 weitere Papiere aufgelegt. Mit einer Schreibmaschine wird bei konstanter Anschlagstärke eine Fläche von ca. 4 × 4 cm so eng wie möglich mit dem Buchstaben «w» beschriftet. Die nun auf dem unteren Nehmerpapier sichtbare Durchschrift der Papierprobe wird auf ihre Schriftintensität untersucht, indem man den Verlust an Reflexion gegenüber nicht beschriftetem Papier mit einem Remissionsmessgerät (Elrephomat der Fa. Zeiss) ermittelt.

Es wurde folgende Durchschreibeintensität gemessen:

|            | Remissionswert: |
|------------|-----------------|
| Beispiel 3 | 40,6 %          |
| Beispiel 4 | 37,0 %          |

Beispiel 6

Mit der Suspension aus Beispiel 3 wurde eine Flexodruckpaste wie folgt hergestellt:

20 Teile Schellack werden mit 5 Gewichtsteilen Ammoniak und 15 Teilen Wasser verrührt und erhitzt, verseift und wasserlöslich gemacht. In diese Lösung werden 60 Teile der Suspension nach Beispiel 3 eingerührt.

Die Paste wurde mit einem Flexodruckwerk mit weichem Gummituch partiell auf einen Papierträger aufgedruckt. Das Auftragsgewicht betrug ca. 6 g/m².

Bei der Messung der Durchschreibeintensität gemäss Beispiel 5 wurde ein Remissionswert von 25% festgestellt.

**Patentansprüche**

1. Verfahren zur Herstellung von 35–60 Gewichtsprozent Mikrokapseln enthaltenden wässrigen Suspensionen nach dem Grenzflächenpolyadditionsverfahren aus Polyisocyanaten und Aminen, anschliessender Nachbehandlung und Neutralisation, dadurch gekennzeichnet, dass

a) als Polyisocyanat ein Isocyanurat-modifiziertes aliphatisches Polyisocyanat verwendet wird und

b) direkt nach Zugabe der Amine und vor einer weiteren Nachbehandlung die Suspension auf einen pH-Wert≤7 gebracht wird.

2. Verfahren nach Anspruch 1, dadurch gekennzeichnet, dass die Mikrokapseln Farbstoffvorläufer enthalten.

3. Verwendung der Mikrokapselsuspensionen nach Anspruch 2 zur Herstellung ganz oder partiell kopierender Durchschreibesysteme nach dem Tief- oder Flexodruckverfahren.

## Claims

1. Process for the production of aqueous suspensions containing 35–60 per cent by weight of microcapsules by the interfacial polyaddition process from polyisocyanates and amines, subsequent after-treatment and neutralisation, characterised in that

a) an isocyanurate-modified aliphatic polyisocyanate is used as the polyisocyanate and

b) the suspension is adjusted to a pH-value of $\leqq 7$ directly after the addition of the amines and before a further after-treatment.

2. Process according to Claim 1, characterised in that the microcapsules contain dye precursors.

3. Use of the microcapsule suspensions according to Claim 2 for the production of completely or partly coated copying systems by the rotogravure or flexograph processes.

## Revendications

1 – Procédé de préparation de suspensions aqueuses contenant 35 à 60% en poids de microcapsules par le procédé de polyaddition à l'interface de polyisocyanates et d'amines, puis post-traitement et neutralisation, procédé caractérisé en ce que:

a) on utilise comme polyisocyanate un polyisocyanate aliphatique modifié par de l'isocyanurate, et

b) après addition de l'amine et avant un post-traitement ultérieur, on porte directement le pH de la suspension à une valeur inférieure ou égale à 7.

2 – Procédé selon la revendication 1, caractérisé en ce que les microcapsules contiennent des précurseurs de colorants.

3 – Application de suspensions de microcapsules selon la revendication 2 pour la préparation, d'après le procédé d'impression en creux ou d'impression flexographique, de systèmes entièrement ou partiellement autocopiants.